# EUROPÄISCHE PATENTANMELDUNG

(11) **EP 1 164 772 A1**
(43) Veröffentlichungstag der Anmeldung: **19.12.2001**
(21) Anmeldenummer: 01440165.7
(22) Anmeldetag: 11.06.2001
(51) Int. Cl.: H04M 3/436, H04Q 3/00

(54) **Verfahren zur Behandlung der auf einen Teilnehmer eines Fernsprechnetzes gerichteten Anrufe**

(30) Priorität: 16.06.2000 DE 10029753
(71) Anmelder: ALCATEL, 75008 Paris (FR)
(72) Erfinder: Larger, Sascha, 70176 Stuttgart (DE); Zeller, Wolfgang, 71144 Steinenbronn (DE); Sutter, Emmanuel, 53173 Bonn (DE)
(74) Vertreter: Brose, Gerhard

(57) **Zusammenfassung**

Die Erfindung betrifft ein Verfahren zur Behandlung eines auf einen angerufenen Teilnehmer (B) eines Fernsprechnetzes (KN) gerichteten Anrufs mit den Schritten:
- Empfang einer Sprachnachricht von einem anrufenden Teilnehmer (A),
- Übermittlung einer aus der ersten Nachricht gebildeten Anrufinformαtion an den angerufenen Teilnehmer (B),
- Empfang einer Nachricht vom angerufenen Teilnehmer (B) zur Entscheidung einer Weiterbehandlung des Anrufs,
- Analyse dieser Nachricht zur Ermittlung der Entscheidung über die Weiterbehandlung und
- Ausführung dieser Weiterbehandlung gemäß der ermittelten Entscheidung,
sowie ein Fernsprechnetz (KN), einen Steuerrechner (SCP) und ein Computerprogramm hierfür.

## Beschreibung

Die Erfindung betrifft ein Verfahren zur Behandlung der auf einen Teilnehmer eines Fernsprechnetzes gerichteten Anrufe, ein Fernsprechnetz mit Einrichtungen zum Erbringen von Diensten hierfür, einen Steuerrechner zum Steuern von Diensten und ein Computerprogramm zur Ausführung in einem Steuerrechner hierfür.

Im öffentlichen Fernsprechnetz (Public Switched Telephone Network, PSTN) werden im zunehmenden Maße über den klassischen Dienst der Herstellung von Kommunikationsverbindungen hinaus zusätzliche Dienste angeboten. Eine Kategorie dieser Dienste bilden Dienste, die zur Information der Teilnehmer über die im Aufbau begriffene oder bereits aufgebaute Kommunikationsverbindung dienen, wie z.B. die Anzeige der Rufnummer des anrufenden Teilnehmers beim angerufenen Teilnehmer (engl.: Calling Line Identification, CLI). Eine weitere Kategorie dieser Dienste bilden solche Dienste, die eine komfortable und flexible Nutzung des Fernsprechnetzes ermöglichen, z.B. durch Vergabe einer einheitlichen Rufnummer, unter der ein Teilnehmer zu definierten Tageszeiten an verschiedenen Stellen erreichbar ist. Zu dieser Kategorie von Diensten gehören auch zukünftig zunehmenden Dienste, bei denen der Verbindungsaufbau mit Hilfe von Spracheingabe gesteuert wird.

Durch Kombination von oben genannten Diensten ist es möglich, Dienste anzubieten, die dem Dienst eines persönlichen Sekretärs entsprechen. Bei einem seit neuestem von verschiedenen Netzbetreibern des Fernsprechnetzes angebotener Dienst, der sich "Personal Assistent" nennt, wird dem Teilnehmer, der diesen Dienst abonniert hat, beispielsweise vor Gesprächsannahme der Name des anrufenden Teilnehmers genannt. Falls er das Gespräch nicht annehmen will, wird es dem anrufenden Teilnehmer ermöglicht, eine Nachricht zu hinterlassen. Durch einfache Spracheingabe eines Namens, z.B. des Namens des Teilnehmers, der zuvor erfolglos angerufen hat, wird der Verbindungsaufbau zu diesem Teilnehmer veranlasst.

Ein weiterer, angebotener Dienst ermöglicht es dem Diensteabonnenten, eine Liste von Namen oder Telefonnummern für solche Teilnehmer anzugeben, die Zugang zu einer Telefonkonferenz erhalten (Positivliste) oder keinen Zugang erhalten sollen (Negativliste).

Den genannten Diensten ist gemeinsam, dass es dem Diensteabonnenten ermöglicht wird, Anrufe aufgrund der offenbarten Identität des anrufenden Teilnehmers anzunehmen oder abzulehnen. Ein weiteres, wichtiges Kriterium für die Gesprächsannahme ist allerdings das Gesprächsthema. Dazu müsste dem anrufenden Teilnehmer die Möglichkeit gegeben werden, dem angerufenen Teilnehmer vor dem eigentlichen Gespräch Informationen über das Gesprächsthema zukommen zu lassen, aufgrund derer der angerufene Teilnehmer dann über die Annahme des Gesprächs entscheiden kann. Mit heutigen Diensten und Einrichtungen steht eine solche Möglichkeit nicht zur Verfügung; der angerufene Teilnehmer muss ein Gespräch entweder zunächst angenehmen und dann gegebenenfalls wieder abbrechen, oder er wartet eine Sprachnachricht ab, die der anrufende Teilnehmer beispielsweise einem Anrufbeantworter übermittelt und entscheidet anschließend aufgrund des Inhalts dieser Sprach-Nachricht, ob er ein Gespräch mit diesem Teilnehmer führen will.

Der Erfindung liegt nun die Aufgabe zugrunde, ein komfortables Verfahren und geeignete Mittel zu Realisierung eines Dienstes zur Echtzeitbehandlung von Gesprächswünschen (engl.: real time call handling) zu schaffen, mit dem es einem angerufenen Teilnehmer ermöglicht wird, über die Behandlung eines Anrufes aufgrund einer vom anrufenden Teilnehmer übermittelten Information zu entscheiden, ohne dass der angerufene Teilnehmer den Anruf vorher annehmen muss. Dabei soll es sich um ein netzseitiges Verfahren und netzseitige Mittel handeln, so dass die bestehenden Teilnehmereinrichtungen für diesen Dienst genügen.

Diese Aufgabe wird erfindungsgemäß gelöst durch ein Verfahren nach der Lehre des Anspruchs 1, ein Fernsprechnetz nach der Lehre des Anspruchs 9, einen Steuerrechner nach der Lehre des Anspruchs 10 und ein Computerprogramm nach der Lehre des Anspruchs 11.

Der Grundgedanke der Erfindung ist, dass ein anrufender Teilnehmer zunächst eine Information an eine Dienste-Einrichtung übermittelt, die an den angerufenen Teilnehmer übermittelt wird. Der angerufene Teilnehmer kann dann aufgrund dieser Information entscheiden, wie dieser Anruf weiter behandelt werden soll. Will er das Gespräch annehmen, so wird unmittelbar nach Mitteilung des Annahmewunsches die Verbindung zum anrufenden Teilnehmer veranlasst. Bei Ablehnung kann dem anrufenden Teilnehmer eine bestimmte festgelegte Nachricht durch die Dienste-Einrichtung übermittelt werden. Zusätzlich ist es möglich, vorzusehen, dass der anrufende Teilnehmer mit einem anderen Teilnehmer verbunden werden kann.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Fig.1: zeigt ein Beispiel eines erfindungsgemäßen Fernsprechnetzes mit darin enthaltenen Dienste-Einrichtungen,
- Fig.2a: zeigt beispielhaft einen Protokollablauf eines erfindungsgemäßen Verfahrens zur Dienstesteuerung bei Herstellung einer Gesprächsverbindung,
- Fig.2b: zeigt einen zu Fig.2a veränderten Protokollablauf des erfindungsgemäßen Verfahrens bei Gesprächsablehnung,
- Fig.2c: zeigt einen zu Fig.2a veränderten Protokollablauf des erfindungsgemäßen Verfahrens bei Gesprächsweiterleitung und
- Fig.3: zeigt ein erfindungsgemäßes Fernsprechnetz in Verbindung mit dem Internet.

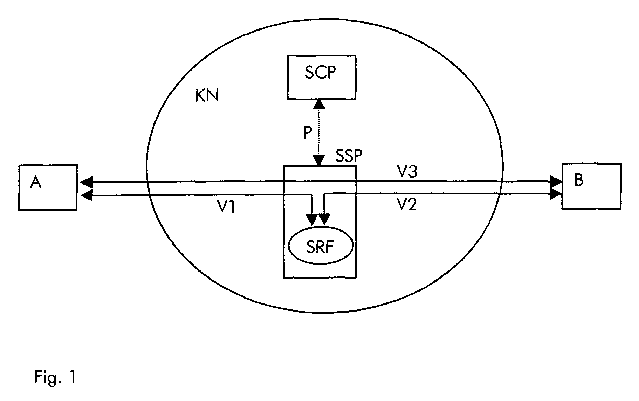

Fig. 1 zeigt ein Fernsprechnetz KN mit einer (Dienste-) Vermittlungsstelle SSP und einem (Dienste-) Steuerrechner SCP. In die Vermittlungsstelle SSP ist eine Funktion SRF eingezeichnet. Weiter sind zwei Teilnehmer A und B dargestellt. Mit dem Begriff Teilnehmer ist hier das Endgerät (engl.: terminal) des Teilnehmers gemeint; der Begriff wird allerdings im folgenden auch für die teilnehmende Person selber verwendet. Dabei ist jeweils eine Verbindung V1 und V2 zwischen dem Teilnehmer A bzw. B und der in der Vermittlungsstelle SSP befindlichen Funktion SRF und eine über die Vermittlungsstelle SSP führende Verbindung V3 zwischen dem Teilnehmer A und dem Teilnehmer B dargestellt. Die als Doppelpfeile dargestellten Verbindungen V1, V2 und V3 stellen Fernsprechverbindungen dar. Weiter ist zwischen der Vermittlungsstelle SSP und dem Steuerrechner SCP als gestrichelter Doppelpfeil ein Protokoll P zur Dienstesteuerung dargestellt.

Der im folgenden beschriebene Dienst zur Echzeitbehandlung von Gesprächswünschen wird im folgenden als Dienst eines sogenannten "Intelligenten Netzes" (engl.: Intelligent Network, abgekürzt IN) dargestellt. Der Steuerrechner SCP (engl.: Service Control Point) enthält Mittel zum Steuern der Dienste des Intelligenten Netzes. Bei der Vermittlungsstelle SSP handelt es sich hier um eine Vermittlungsstelle, die die sogenannte Dienste-Vermittlungsfunktion (engl.: Service Switching Function, SSF) integriert hat. Bei der Funktion SRF (engl.: Specialised Ressource Function) handelt es sich hier um eine spezielle Funktion zur Sprachbehandlung. In diesem Beispiel wird der Einfachheit wegen angenommen, dass die Funktion SRF in die Vermittlungsstelle SSP integriert ist. Weiter wird der Einfachheit wegen angenommen, das beide Teilnehmer A und B direkt an die Vermittlungsstelle SSP angeschlossen sind. Dadurch lässt sich im folgenden ein Beispiel eines Protokolls P zur Dienstesteuerung beschreiben, dass konzentriert zwischen dem Steuerrechner SCP und der Vermittlungsstelle SSP abläuft. Einen kurzen Überblick über die generellen Aufgaben des Service Switching Points SSP, des Service Control Points SCP und der Specialised Resource Function SRF im Intelligenten Netz gibt das Buch "Intelligente Netze" von Gerd Sigmund, erschienen 1999 im Hüthig Verlag, Heidelberg (ISBN3-7785-3908-6), auf der Seite 77.

Indem der Teilnehmer A die Rufnummer des Teilnehmers B wählt, ruft er automatisch den für den Teilnehmer B eingerichteten Dienst zur Echzeitbehandlung von Gesprächswünschen auf. Die Vermittlungsstelle SSP detektiert diesen Aufruf und informiert den Steuerrechner SCP. Der Steuerrechner veranlasst nun die Vermittlungsstelle SSP dazu, den Teilnehmer A zur Übermittlung einer Information über das gewünschte Gespräch aufzufordern. Dazu wird die Verbindung V1 zwischen dem Telnehmer A und der in die Vermittlungsstelle SSP integrierten Funktion SRF hergestellt; die inneren Abläufe in der Vermittlungsstelle SSP dazu sind hier nicht dargestellt. Die Informationsaufnahme wird von der Funktion SRF durchgeführt. Anschließend veranlasst der Steuerrechner SCP den Aufbau der Verbindung V2 zwischen der Vermittlungsstelle SSP und dem Teilnehmer B. Die Funktion SRF übermittelt dem Teilnehmer B die vom Teilnehmer A übermittelte Information. Aufgrund dieser Information entscheidet der Teilnehmer B über die Weiterbehandlung des Gesprächswunsches vom Teilnehmers A. Dabei gibt es drei grundsätzliche Fälle:
a. Die Gesprächsannahme,
b. die Gesprächsablehnung und
c. eine Gesprächsumleitung.

Der Steuerrechner SCP wird über die Wahl des Teilnehmers B informiert und veranlasst unter Beendigung der Verbindungen V1 und V2 je nach getroffener Wahl die Einrichtung einer direkten Verbindung V3 zwischen Teilnehmer A und Teilnehmer B, das Auslösen der Verbindung V2 zwischen dem Teilnehmer A und der Vermittlungsstelle SSP oder die Einrichtung einer Verbindung zwischen dem Teilnehmer A und einer weiteren, hier nicht dargestellten Einrichtung.

Für die Erfindung ist die konkrete physikalische Ausprägung der Dienste-Einrichtung nicht wesentlich. So ist es denkbar, die Funktion des Steuerrechners SCP, die Dienste-Vermittlungsfunktion SSF sowie die Funktion SRF in einem Rechner zu integrieren. Diese Funktionen können auch getrennt in verschiedenen Rechnern eingerichtet werden. Es ist sogar möglich, die Funktion SRF so aufzuteilen, dass ein einfacherer Funktionsteil in der Vermittlungsstelle SSP integriert sind, während ein komplexerer Funktionsteil, wie z.B. die im späteren Verlauf beschriebenen Mittel zur Sprachanalyse, in einem gesonderten Rechner integriert sind. Weiter ist es für die Erfindung nicht wesentlich, ob die Teilnehmer an der gleichen oder an verschiedenen Vermittlungsstellen angeschlossen sind und ob die Dienste-Vermittlungsfunktion (SSF) direkt in die Vermittlungsstellen integriert ist oder in gesonderten Rechnern untergebracht ist. Die Erfindung ist nicht auf das Intelligente Netz beschränkt, sie könnte auch durch Einfügen entsprechender Programmmodule direkt in die über das Signalisierungsnetz miteinander verbundenen Vermittlungsstellen realisiert werden.

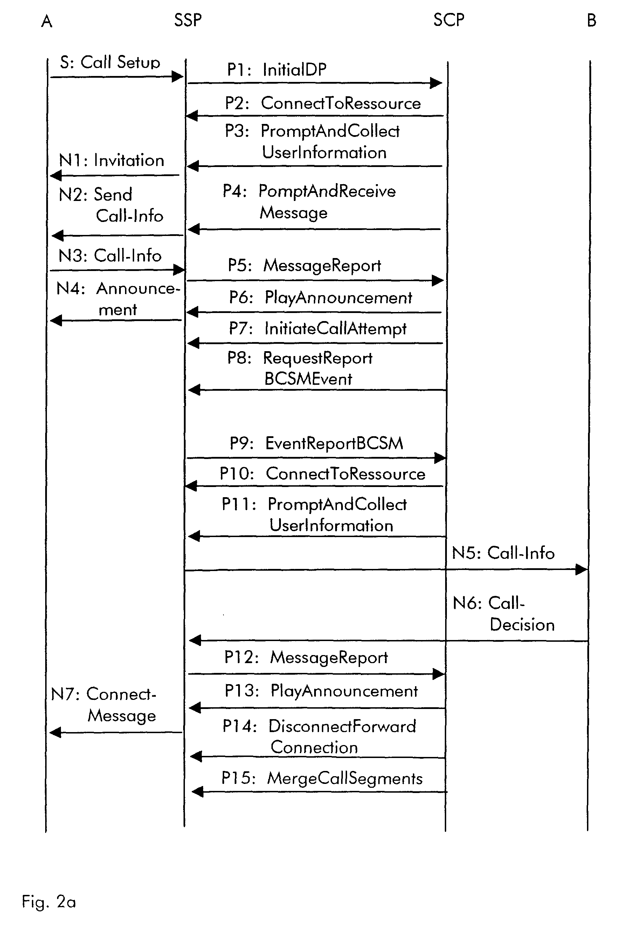

In Fig.2a - Fig.2c wird das während des erfindungsgemäßen Verfahrens ablaufende Protokoll P beispielhaft für je eine der drei vorhin genannten Fälle beschrieben:

Fig.2a zeigt einen beispielhaften Ablauf des Protokolls P für den Fall der Gesprächsannahme, wobei die zwischen der Vermittlungsstelle SSP und dem Steuerrechner SCP ausgetauschten (Protokoll-)Nachrichten P1 - P15 in Zusammenhang mit zwischen den Teilnehmern A und B und der Vermittlungsstelle SSP ausgetauschten (Sprach-)Nachrichten N1 - N7 und der Nachricht S in chronologischer Reihenfolge von oben nach unten dargestellt sind:
Eine Nachricht S oder Call-Setup wird vom Teilnehmer A zur Vermittlungsstelle SSP gesendet,
eine Nachricht P1 oder InitialDP wird von der Vermittlungsstelle SSP zum Steuerrechner SCP gesendet,
eine Nachricht P2 oder ConnectToRessource wird vom Steuerrechner SCP zur Vermittlungsstelle SSP gesendet,
eine Nachricht P3 oder PromptAndCollectUserInformation wird vom Steuerrechner SCP zur Vermittlungsstelle SSP gesendet,
eine Nachricht N1 oder Invitation wird von der Vermittlungsstelle SSP zum Teilnehmer A gesendet,
eine Nachricht P4 oder PromptAndReceiveMessage wird vom Steuerrechner SCP zur Vermittlungsstelle SSP gesendet,
eine Nachricht N2 oder Send Call-Info wird von der Vermittlungsstelle SSP zum Teilnehmer A gesendet,
eine Nachricht N3 oder Call-Info wird vom Teilnehmer A zur Vermittlungsstelle SSP gesendet,
eine Nachricht P5 oder MessageReport wird von der Vermittlungsstelle SSP zum Steuerrechner SCP gesendet,
eine Nachricht P6 oder PlayAnnouncement wird vom Steuerrechner SCP zur Vermittlungsstelle SSP gesendet,
eine Nachricht N4 oder Announcement wird von der Vermittlungsstelle SSP zum Teilnehmer A gesendet,
eine Nachricht P7 oder InitiateCallAttempt wird vom Steuerrechner SCP zur Vermittlungsstelle SSP gesendet,
eine Nachricht P8 oder RequestReportBCSMEvent wird vom Steuerrechner SCP zur Vermittlungsstelle SSP gesendet,
eine Nachricht P9 oder EventReportBCSM wird von der Vermittlungsstelle SSP zum Steuerrechner SCP gesendet,
eine Nachricht P10 oder ConnectToRessource wird vom Steuerrechner SCP zur Vermittlungsstelle SSP gesendet,
eine Nachricht P11 oder PromtAndCollectUserInformation wird vom Steuerrechner SCP zur Vermittlungsstelle SSP gesendet,
eine Nachricht N5 oder Call-Info wird von der Vermittlungsstelle SSP zum Teilnehmer B gesendet,
eine Nachricht N6 oder Call-Decision wird vom Teilnehmer B zur Vermittlungsstelle SSP gesendet,
eine Nachricht P12 oder MessageReport wird von der Vermittlungsstelle SSP zum Steuerrechner SCP gesendet,
eine Nachricht P13 oder PlayAnnouncement wird vom Steuerrechner SCP zur Vermittlungsstelle SSP gesendet,
eine Nachricht N7 oder Connect-Message wird von der Vermittlungsstelle SSP zum Teilnehmer A gesendet,
eine Nachricht P14 oder DisconnectForwardConnection wird vom Steuerrechner SCP zur Vermittlungsstelle SSP gesendet und
eine Nachricht P15 oder MergeCallSegments wird vom Steuerrechner SCP zur Vermittlungsstelle SSP gesendet.

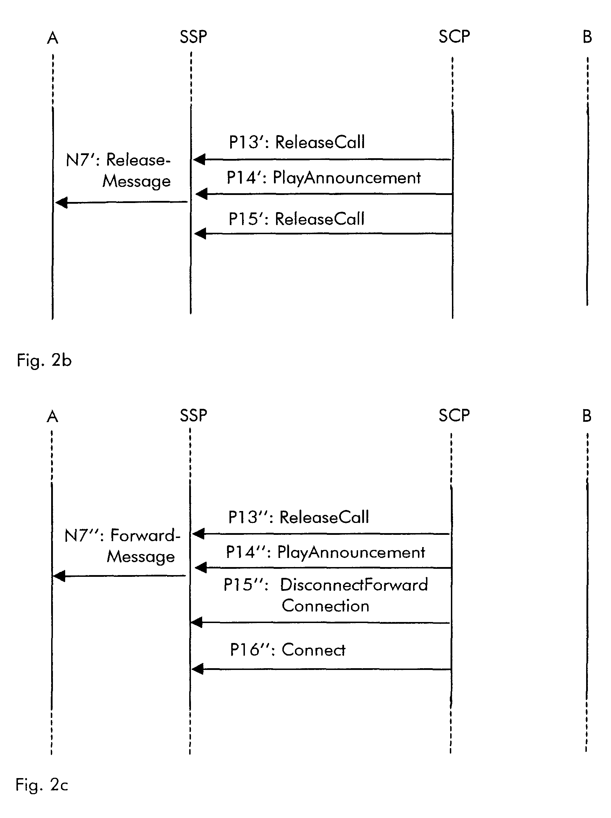

Mit der Nachricht S oder Call-Setup übermittelt der Teilnehmer A die Dienste-Rufnummer des Teilnehmers B. Die Vermittlungsstelle SSP erkennt den Diensteaufruf aufgrund der Dienste-Rufnummer und informiert den Steuerrechner SCP mit der Nachricht P1 oder InitialDP. Mit dieser Nachricht wird die Dienstesteuerung im Steuerrechner SCP gestartet. Mit der Nachricht P2 oder ConnectToRessource wird die Vermittlungsstelle SSP aufgefordert, eine Verbindung vom Teilnehmer A zu der in Fig.1 beschriebenen Funktion SRF herzustellen. Diese Funktion SRF hat Zugriff auf definierte Sprachnachrichten, die im Zusammenhang mit diesem Dienst an die Teilnehmer A und B gesendet werden können. Mit der Nachricht P3 oder PromptAndCollectUserInformation wird die Vermittlungsstelle aufgefordert eine bestimmte Sprachnachricht, die Nachricht N1 oder Invitation an den Teilnehmer A zu übermitteln. Mit dieser Nachricht wird der Teilnehmer begrüßt und über den Dienst informiert. Hier kann für den Teilnehmer A die Möglichkeit der Eingabe einer Kennnummer vorgesehen werden, um eine direkte Durchstellung zum Teilnehmer B zu erreichen. Nach Verifizierung der Kennnummer im Steuerrechner SCP werden die Nachrichten P4 - P13 übersprungen. Mit der Nachricht P4 oder PromptAndReceiveMessage wird die Vermittlungsstelle SSP aufgefordert, eine Nachricht N2 oder Send Call-Info zum Teilnehmer A zu übermitteln, um den Teilnehmer A zur Übermittlung einer Nachricht N3 oder Call-Info zu bitten. Diese Nachricht kann eine frei formulierte Gesprächsinformation sein; es ist aber auch möglich, den Teilnehmer A aufzufordern, bestimmte Informationen zu übermitteln (z.B. Gesprächsthema, geplante Gesprächsdauer und Priorität) und diese Information in einer bestimmter Weise (z.B. in Stichworten) zu übermitteln. Um der Vermittlungsstelle SSP das Ende der Übermittlung der Nachricht N3 mitzuteilen, kann vorgesehen werden, dass der Teilnehmer A eine bestimmte Ziffer übermittelt. Alternativ zu dieser Endekennung kann eine längere Sprachpause des Teilnehmers A als Ende der Nachricht N3 angenommen werden oder es kann eine feste, begrenzte Zeit zur Übermittlung dieser Nachricht vorgesehen werden. Mit der Nachricht P5 oder MessageReport wird der Steuerrechner SCP über den Abschluss der Gesprächsaufnahme informiert. Die Nachricht P6 oder PlayAnnouncement fordert die Vermittlungsstelle SSP auf, dem Teilnehmer A mit einer Nachricht N4 oder Announcement darüber zu informieren, dass sein Gesprächswunsch nun bearbeitet wird. Mit der Nachricht P7 oder InitiateCallAttempt wird die Vermittlungsstelle SSP aufgefordert, eine Verbindung zum Teilnehmer B herzustellen. Mit der Nachricht P8 oder RequestReportBCSMEvent wird die Vermittlungsstelle SSP aufgefordert, den Steuerrechner SCP über den Zustand der Verbindungsherstellung zu informieren. Mit der Nachricht P9 oder EventReportBCSM informiert die Vermittlungsstelle SSP den Steuerrechner SCP insbesondere darüber, ob der Teilnehmer B frei oder belegt ist. Für den Fall, dass der Teilnehmer B belegt ist, können verschiedene Alternativen vorgesehen werden. Eine Möglichkeit ist, dass dem Teilnehmer A die Möglichkeit gegeben wird, so lange zu warten, bis der Teilnehmer B wieder frei ist. Dies kann mit z.B. einer hier nicht dargestellten Nachricht "Teilnehmer B ist zur Zeit belegt; bitte haben Sie noch etwas Geduld" bestehen. Weitere Alternativen stellen Verzweigungen zu den unter Fig2.b oder unter Fig2.c beschriebenen Schritten zur Gesprächsbeendigung bzw. zur Gesprächsweiterleitung dar. Ist der Teilnehmer A nicht belegt, so wird die Vermittlungsstelle SSP mit der Nachricht P10 oder ConnectToRessource aufgefordert, eine Verbindung vom Teilnehmer B zur Funktion SRF herzustellen. Mit der Nachricht P11 oder PromtAndCollectUserInformation wird die Vermittlungsstelle SSP weiter aufgefordert, dem Teilnehmer B die vom Teilnehmer A mit der Nachricht N4 übermittelte und in der Funktion SRF gespeicherte Gesprächsinformation mit der Nachricht N5 oder Call-Info zu übermitteln. Dem Teilnehmer B stehen hier die unter Fig.1 genannten drei verschiedene Möglichkeiten (Fall a - Fall c) zur Weiterbehandlung des Gesprächswunsches zu Verfügung. Mit der Nachricht N6 oder Call-Decision teilt er seine Entscheidung mit. Dies kann durch Eingabe einer bestimmten Ziffer erfolgen. Diese Entscheidung wird in der Funktion SRF analysiert und das Ergebnis dem Steuerrechner SCP mit der Nachricht P12 oder MessageReport mitgeteilt. Für den Fall b, dass er das Gespräch nicht annehmen will, oder den Fall c, dass er das Gespräch weiterleiten will, fährt der Steuerrechner mit dem unter Fig.2b bzw. Fig.2c beschriebenen Schritten fort. Für den Fall a, dass er das Gespräch annehmen will, fordert der Steuerrechner SCP die Vermittlungsstelle SSP mit der Nachricht P13 oder PlayAnnouncement auf, den Teilnehmer A mit der Nachricht N7 oder Connect-Message über die Verbindungsherstellung zum Teilnehmer B zu informieren, z.B. "Sie werden jetzt mit ihrem gewünschten Gesprächspartner verbunden." Mit der Nachricht P14 oder DisconnectForwardConnection und der Nachricht P15 oder MergeCallSegments wird die Vermittlungsstelle SSP aufgefordert, die jeweiligen Verbindungen der Teilnehmer A und B zur Funktion SRF zu beenden und diese Teilnehmer untereinander zu verbinden.

Fig.2b zeigt einen Ausschnitt des gegenüber Fig.2a veränderten Protokollablaufs für den Fall der Gesprächsablehnung, bei dem die Nachrichten P13 - P15 und N7 durch die Nachrichten P13' - P15' und N7' ausgetauscht sind. Der Ausschnitt zeigt ausschließlich die ausgetauschten Nachrichten in chronologischer Reihenfolge:
Eine Nachricht P13' oder ReleaseCall wird vom Steuerrechner SCP zur Vermittlungsstelle SSP gesendet,
eine Nachricht P14' oder PlayAnnouncement wird vom Steuerrechner SCP zur Vermittlungsstelle SSP gesendet und
eine Nachricht N7' oder Release-Message wird von der Vermittlungsstelle SSP zum Teilnehmer A gesendet und
eine Nachricht P15' oder ReleaseCall wird vom Steuerrechner SCP zur Vermittlungsstelle SSP gesendet.

In diesem Protokollablauf sind die Schritte dargestellt, die durchlaufen werden, wenn der Teilnehmer B sich mit der in Fig.2.a beschriebenen Nachricht N6 oder Call-Decision für die Gesprächsablehnung entschieden hat. Nachdem der Steuerrechner SCP diese Entscheidung mit der Nachricht P12 erhält, übermittelt er nun die Nachricht P13' oder ReleaseCall. Damit wird die Vermittlungsstelle SSP aufgefordert, die Verbindung zum angerufenen Teilnehmer B auszulösen. Mit der Nachricht P14' oder PlayAnnouncement wird die Vermittlungsstelle SSP weiter aufgefordert, den Teilnehmer A mit der Nachricht N7' oder Release-Message darüber zu informieren, dass sein Gesprächswunsch nicht angenommen wurde. Mit der Nachricht P15' oder ReleaseCall wird die Verbindung zum Teilnehmer A dann ausgelöst.

Fig.2c zeigt einen Ausschnitt des gegenüber Fig2.a veränderten Protokollablaufs für den Fall der Gesprächsumleitung, bei dem die Nachrichten P13 - P15 und N7 durch die Nachrichten P13" - P16" und N7" ausgetauscht sind. Der Ausschnitt zeigt ausschließlich die ausgetauschten Nachrichten in chronologischer Reihenfolge:
Eine Nachricht P13" oder ReleaseCall wird vom Steuerrechner SCP zur Vermittlungsstelle SSP gesendet,
eine Nachricht P14" oder PlayAnnouncement wird vom Steuerrechner SCP zur Vermittlungsstelle SSP gesendet und
eine Nachricht N7" oder Forward-Message wird von der Vermittlungsstelle SSP zum Teilnehmer A gesendet,
eine Nachricht P15" oder DisconnectForwardConnection und
eine Nachricht P16" oder Connect wird vom Steuerrechner SCP zur Vermittlungsstelle SSP gesendet.

In diesem Protokollablauf sind die Schritte dargestellt, die durchlaufen werden, wenn der Teilnehmer B sich mit der in Fig.2a beschriebenen Nachricht N6 oder Call-Decision für die Gesprächsweiterleitung entschieden hat. Nachdem der Steuerrechner SCP diese Entscheidung mit der Nachricht P12 erhält, übermittelt er nun die Nachricht P13" oder ReleaseCall. Damit wird die Vermittlungsstelle SSP aufgefordert, die Verbindung zum angerufenen Teilnehmer B auszulösen. Mit der Nachricht P14" oder PlayAnnouncement wird die Vermittlungsstelle SSP weiter aufgefordert, den Teilnehmer A mit der Nachricht N7" oder Forward-Message darüber zu informieren, dass er mit einer anderen Einrichtung, z.B. einem hier nicht dargestellten weiteren Teilnehmer C, verbunden werden soll. Mit der Nachricht P15" oder DisconnectForwardConnection und der anschließenden Nachricht P16" oder Connect wird die Vermittlungsstelle SSP aufgefordert, die Verbindung des Teilnehmers A zur unter Fig.2.a beschriebenen Funktion SRF zu beenden und eine Verbindung zur anderen Einrichtung herzustellen.

In Fig.2.a - Fig2.c sind der Übersichtlichkeit wegen bis auf die Nachricht S keine weiteren Signalisierungsnachrichten zwischen den Teilnehmern A und B und der Vermittlungsstelle SSP dargestellt, wie z.B. die vor Verbindungsaufbau üblichen Nachrichten "Setup" oder "Connect" und die zur Verbindungsauflösung übliche Nachricht "Release". Es ist für den Fachmann ohne weiteres möglich, die oben beschriebenen Protokollabläufe mit diesen Nachrichten zu vervollständigen. Die zwischen der Vermittlungsstelle SSP und dem Steuerrechner SCP ausgetauschten Nachrichten basieren auf dem von der ITU-T definierten, sogenannten "Intelligent Network Application Protocol" (INAP).

Eine vorteilhafte Weiterbildung des vorhin beschriebenen Verfahrens besteht darin, dass die Funktion SRF Mittel zur Sprachanalyse enthält. Damit kann z.B. die Entscheidung des Teilnehmers B statt durch Eingabe einer bestimmten Ziffer durch Übermittlung bestimmter Sprachnachrichten erfolgen, z.B. "Durchstellen", "Ablehnen" oder "Weiterleiten". Dies ist besonders dann vorteilhaft, wenn mehrere Alternativen zur Weiterleitung, vorgesehen sind, z.B. zu verschiedenen Mitarbeitern einer Firma. Darüber hinaus kann die vom Teilnehmer A übermittelte Nachricht N3 auf einen bestimmten Inhalt analysiert werden. Teilnehmer B könnte beispielsweise wünschen, dass nur Gesprächswünsche mit einem bestimmten Thema durchgestellt werden. Dazu gibt er der Dienste-Einrichtung zuvor bestimmte Stichworte an. Die Funktion SRF analysiert die vom Teilnehmer A übermittelte Nachricht N3 daraufhin, ob diese Stichworte enthalten sind. Wenn ein Stichwort enthalten ist, kann dann z.B. zur Abkürzung der Wartezeit eine sofortige Verbindungsherstellung zwischen dem Teilnehmer A und dem Teilnehmer B erfolgen. Alternativ kann vorgesehen werden, dass der Diensteablauf zwar nicht verändert wird, jedoch statt der gesamten vom Teilnehmer A übermittelten Nachricht N3 nur die enthaltenen Stichworte als Nachricht N4 übermittelt werden.

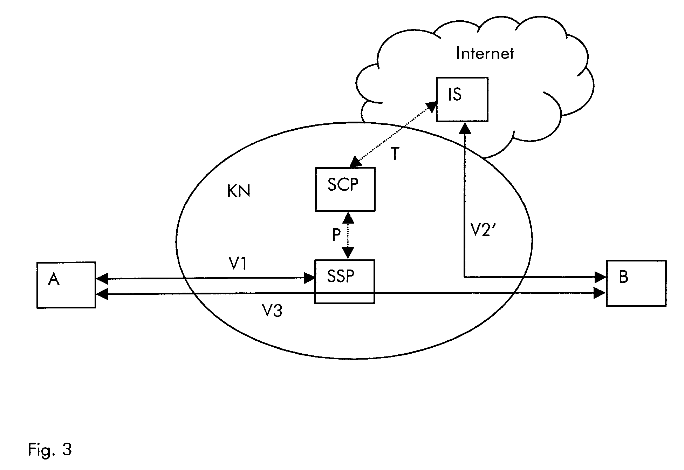

Fig 3 zeigt das aus Fig.1 bekannte Fernsprechnetz KN mit der Vermittlungsstelle SSP und dem Steuerrechner SCP. Weiter sind die Teilnehmer A und B dargestellt. Zusätzlich zu Fig.1 ist hier neben dem Fernsprechnetz KN ein das Internet symbolisierende Netz mit einem Rechner IS eingezeichnet. Wie in Fig.1 ist eine Verbindung V1 zwischen dem Teilnehmer A und der Vermittlungsstelle SSP und eine über die Vermittlungsstelle SSP führende Verbindung V3 zwischen dem Teilnehmer A und dem Teilnehmer B dargestellt. Anders als in Fig.1 ist jedoch statt der Verbindung V2 eine Kommunikationsbeziehung V2' zwischen dem Teilnehmer B und dem Rechner IS dargestellt. Zusätzlich zum Protokoll P zwischen der Vermittlungsstelle SSP und dem Steuerrechner SCP ist ein weiteres Protokoll T zwischen dem Steuerrechner SCP und dem Rechner IS eingezeichnet.

Der wesentliche Unterschied zu dem unter Fig.1 beschriebenen Fernsprechnetz ist hier, dass das Internet in den vorhin beschriebenen Dienst mit einbezogen ist. Der Rechner IS ist dabei ein sogenannter "Web-Server" der sogenannte "Web-Pages", d.h. Schriftinformation in einem elektronischen Seitenformat versenden kann. Mit Hilfe des Protokolls T, das z.B. auf Basis des im Internet üblichen TCP/IP- Protokolls aufgebaut sein kann, wird der Rechner IS angewiesen, die in Fig.1 über die Verbindung V2 übermittelte Nachricht N5 nun in Form einer "Web-Page" an den Teilnehmer B zu übermitteln. Dies kann durch eine Sprach-zu-Text-Umwandlung (engl.: text to speech conversion) in der unter Fig.2.a beschriebenen Funktion SRF erfolgen. Der Teilnehmer B sendet seine Auswahl N6 zurück zum Rechner IS, der den Steuerrechner SCP im Zuge des Protokollablaufs T informiert. Ansonsten läuft der Dienst analog zu dem insbesondere unter Fig.2.a - Fig2.c beschrieben Dienst ab. Ein wesentlicher Vorteil des Einbezugs des Internets ist die größere Benutzerfreundlichkeit für den Teilnehmer B. Falls er einen ISDN-Anschluss mit zwei Nutzkanälen hat, so kann er auch während einer bestehenden Telefonverbindung bereits Information über einen neuen Gesprächswunsch entgegennehmen. Weiter kann ihm die Möglichkeit gegeben werden, eine kurze Nachricht über das Internet einzugeben, die dann in der Funktion SRF zu Sprache umgewandelt und an den Teilnehmer A übermittelt wird. Weiter ist es möglich, über nur einen Kanal sowohl Sprachnachrichten mittels des sogenannten Protokolls "Voice over IP" als auch Daten mittels TCP/IP zu übermitteln.

## Patentansprüche

1. Verfahren zur Behandlung eines auf einen angerufenen Teilnehmer (B) eines Fernsprechnetzes (KN) gerichteten Anrufs eines anrufenden Teilnehmers (A) mit den folgenden vom Fernsprechnetz (KN) auszuführenden Schritten:
• Empfang einer vom anrufenden Teilnehmer (A) übermittelten Sprachnachricht (N3),
• Übermittlung einer aus der ersten Nachricht (N3) gebildeten Anrufinformation (N5) an den angerufenen Teilnehmer (B),
• Empfang einer Nachricht (N6) vom angerufenen Teilnehmer (B) zur Entscheidung einer Weiterbehandlung des Anrufs,
• Analyse dieser Nachricht (N6) zur Ermittlung einer Entscheidung über die Weiterbehandlung und
• Ausführung dieser Weiterbehandlung gemäß der ermittelten Entscheidung.

2. Verfahren nach Anspruch 1 **dadurch gekennzeichnet, dass** dem angerufenen Teilnehmer (B) mit der Anrufinformation (N5) zwei oder mehr verschiedene Optionen zur Weiterbehandlung des Anrufs angeboten werden.

3. Verfahren nach Anspruch 2 **dadurch gekennzeichnet, dass** eine Option in der Herstellung einer Verbindung (V3) zwischen dem anrufenden (A) und dem angerufenen Teilnehmern (B) besteht.

4. Verfahren nach Anspruch 2 **dadurch gekennzeichnet, dass** eine Option in der Übermittlung einer gespeicherten Nachricht (N7') an den anrufenden Teilnehmer (A) besteht.

5. Verfahren nach Anspruch 2 **dadurch gekennzeichnet, dass** eine Option in der Herstellung einer Verbindung des anrufenden Teilnehmer (A) mit einer einem weiteren Teilnehmer (C) besteht.

6. Verfahren nach Anspruch 1 **dadurch gekennzeichnet, dass** die vom anrufenden Teilnehmer (A) empfangene Sprachnachricht (N3) auf bestimmte Sprachinhalte analysiert wird, und dass der anrufende Teilnehmer (A) mit dem angerufenen Teilnehmer (B) verbunden wird, wenn ein bestimmter Sprachinhalt in der Nachricht (N3) aufgefunden wird.

7. Verfahren nach Anspruch 1 **dadurch gekennzeichnet, dass** die vom anrufenden Teilnehmer (A) übermittelte erste Nachricht (N3) auf einen bestimmten Sprachinhalt analysiert wird und die an den anrufenden Teilnehmer (B) übermittelte Anrufinformation (N5) ein entsprechendes Analyseergebnis enthält.

8. Verfahren nach Anspruch 1 **dadurch gekennzeichnet, dass** die Übermittlung der Anrufinformation (N5) an den Teilnehmer (B) und der Empfang der Nachricht zur Entscheidung über die Weiterbehandlung (N6) über das Internet erfolgt.

9. Fernsprechnetz (KN) mit Einrichtungen, insbesondere Einrichtungen des Intelligenten Netzes (SSP, SCP), zum Erbringen von Diensten, mit folgenden Mitteln:
• Empfangsmittel zum Empfang einer Sprachnachricht (N3) eines anrufenden Teilnehmers (A),
• Erstellungsmittel zum Erstellen einer Anrufinformation (N5) aus der Sprachnachricht (N3) und Sendemittel zum Übermitteln dieser Anrufinformation (N5) an den angerufenen Teilnehmer (B),
• Empfangsmittel zum Empfang einer Nachricht (N6) des angerufenen Teilnehmers (B) zur Entscheidung über die Weiterbehandlung des Anrufs,
• Analysemittel zur Analyse dieser vom angerufenen Teilnehmer (B) empfangenen Nachricht (N6) zur Ermittlung einer Entscheidung über die Weiterbehandlung und
• Steuermittel zur Veranlassung der Weiterbehandlung des Anrufs gemäß der ermittelten Entscheidung.

10. Steuerrechner (SCP) zum Steuern von Diensten mit Mitteln zur Erzeugung der folgenden Anweisungen zur Übermittlung an eine Dienstevermittlungsstelle (SSP):
• Aufforderung zum Empfang einer Sprachnachricht (P4) eines anrufenden Teilnehmers (A),
• Aufforderung zur Übermittlung einer Anrufinformation (P7, P10, P11) an den angerufenen Teilnehmer (B) zum Erhalt einer Nachricht zur Ermittlung einer Entscheidung über die Weiterbehandlung des Anrufs,
• Aufforderung zum Rücksenden eines Reports (P12) über eine vom angerufenen Teilnehmer (B) empfangene Nachricht und
• Aufforderung zur Weiterbehandlung des Anrufs (P13, P14, P15) gemäß der aus dem Report abgeleiteten Entscheidung.

11. Computerprogramm zur Ausführung in einem Steuerrechner (SCP) eines Fernsprechnetzes (KN), mit Mitteln zur Steuerung der Übermittlung der folgenden Aufforderungen an eine Dienste-Vermittlungsstelle (SSP):
• Aufforderung zum Empfang einer Sprachnachricht (P4) eines anrufenden Teilnehmers (A),
• Aufforderung zur Übermittlung einer Anrufinformation (P7, P10, P11) an den angerufenen Teilnehmer (B) zum Erhalt einer Nachricht zur Ermittlung einer Entscheidung über die Weiterbehandlung des Anrufs,
• Aufforderung zum Rücksenden eines Reports (P12) über eine vom angerufenen Teilnehmer (B) empfangenen Nachricht und
• Senden einer Aufforderung zur Weiterbehandlung des Anrufs (P13, P14, P15) gemäß einer aus dem Report abgeleiteten Entscheidung.
